# EUROPEAN PATENT APPLICATION

(11) **EP 0 532 295 A2**
(43) Date of publication of application: **17.03.1993**
(21) Application number: 92308182.2
(22) Date of filing: 09.09.1992
(51) Int. Cl.: H04N 5/20

(54) **Gray scale correction circuit**

(30) Priority: 10.09.1991 JP 229972/91
(71) Applicant: MATSUSHITA ELECTRIC INDUSTRIAL CO., LTD., Kadoma-shi, Osaka-fu, 571 (JP)
(72) Inventor: Okumara, Naoji, Minoo-shi (JP); Izawa, Yosuke, Ibaraki-shi (JP)
(74) Representative: Smith, Norman Ian

(57) **Abstract**

This invention relates to a gray level correction circuit for effective use of the cathode ray tube with a small dynamic range, and has as its object to make a gray level correction on the video signal which has passed the contrast circuit and on the video signal with any value of contrast without making the picture whitish. A gray level correction circuit comprising: a cumulative histogram circuit (1) for forming a cumulative histogram for each field of the input video signal, and outputting a result; a first multiplier circuit (2) for multiplying output of the cumulative histogram circuit (1) by a first constant; a normalizing circuit (3) for normalizing output of the first multiplier circuit (2) by diving by the total number of samples, and outputting a normalized signal; an interpolation circuit (4) for outputting a correction value for each pixel by using output of the normalizing circuit (3) and the input video signal; a second multiplier circuit (5) for multiplying output of the interpolation circuit (4) by a second constant; and an adder circuit (6) for adding output of the second multiplier circuit (5) to the input video signal.

## Description

### BACKGROUND OF THE INVENTION

This invention relates to a gray level correction circuit for effective use of the cathode ray tube with a small dynamic range.

With the progressive enlargement of the screen size and the improvement in picture quality of television sets in recent years, the gray level correction circuit for effective use of the dynamic range of the cathode ray tube as the display unit is assuming an increasing importance. Under these circumstances, various proposals have been made regarding this circuit.

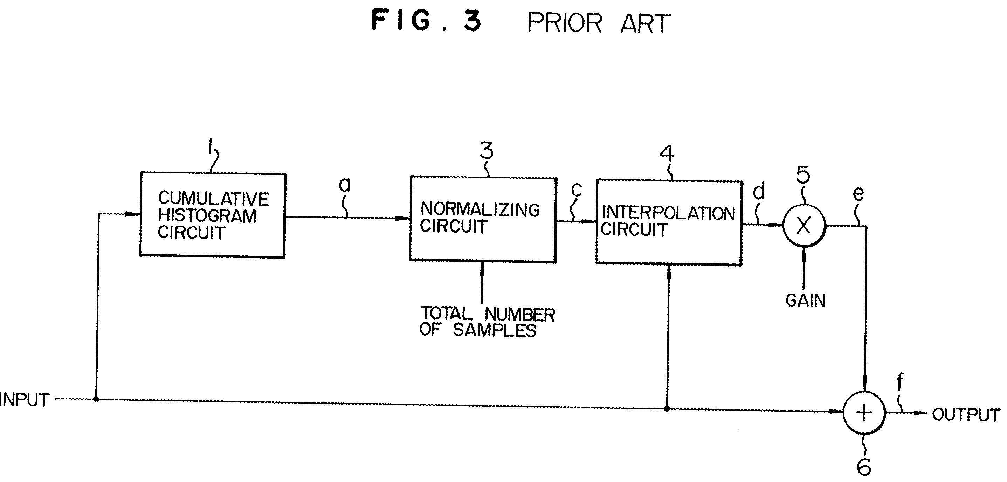

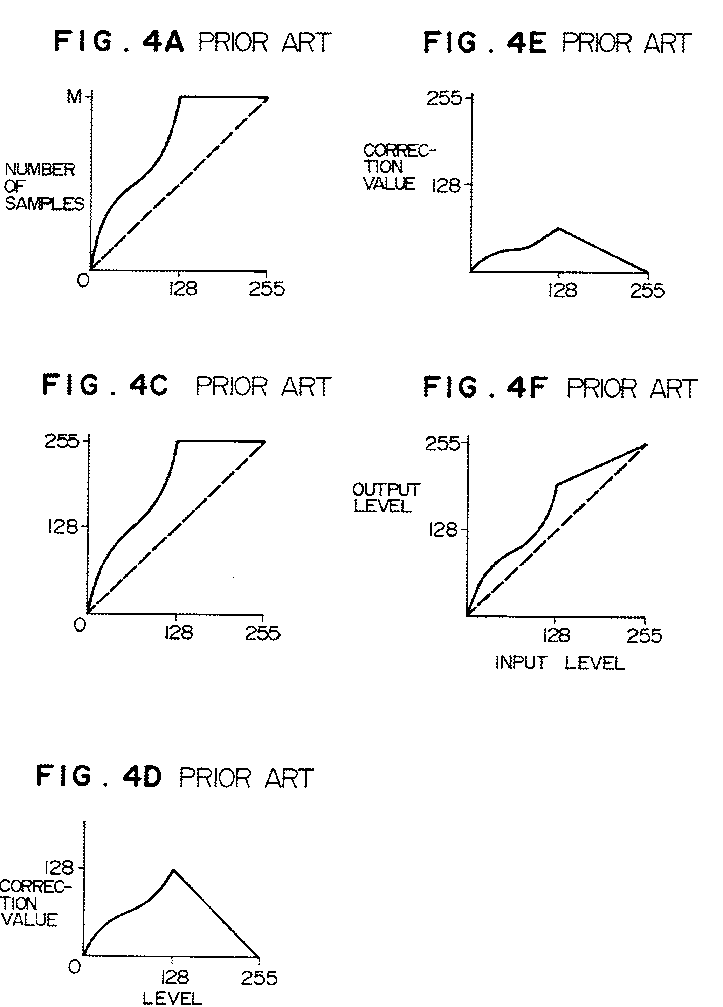

To begin with, a conventional gray level correction circuit will be described with reference to Figs. 3 and 4. Fig. 3 shows the arrangement of a conventional gray level correction circuit. In Fig. 3, reference numeral 1 denotes a cumulative histogram circuit for forming a cumulative histogram of each field of the input video signal, and outputting a result "a". The numeral 3 denotes a normalizing circuit for normalizing output of the cumulative histogram circuit 1 by dividing it by the number of samples hitherto included. The numeral 4 denotes an interpolation circuit for outputting a correction value for each pixel. The numeral 5 denotes a multiplier circuit for multiplying the output of the interpolation circuit 4 by a constant. The numeral 6 denotes an adder circuit for adding the output of the multiplier circuit 5 to the input video signal.

Description will now be made of the operation of the gray level correction circuit configured as described. The cumulative histogram circuit 1 forms a cumulative histogram of each field of the input video signal, and outputs a result "a". Fig. 4 shows samples distributed from level 0 to level 128 in the case where an input signal is an 8-bit signal which can represents any of 256 levels of tone. The sample number M at level 255 is a total number of samples because the graph is a cumulative histogram. Then, the normalizing circuit 3 divides the result "a" of the histogram by the total number of samples, and outputs "c". In Fig. 4, data used here is output by 8-bit signals. The normalized signal "c" is input to the interpolation circuit 4, which subtracts an input signal from the cumulative histogram normalized for each pixel of the input video signal, and outputs a correction value "d" for each pixel. The multiplier 5 multiplies the correction value "d" by a constant to decide a correction amount, and outputs a correction signal "e". The constant used in Fig. 4 is 1/2. Finally, the adder circuit 6 adds the input signal and the correction signal "e" together, and supplies output "f".

In the circuit configuration as mentioned above, however, if the input signal had passed a contrast circuit which decides the amplitude, owing to the value of contrast, output of the cumulative histogram reaches the total number of samples at some low level. In the case of Fig. 4A, the total number of samples is concentrated in a range of not higher than level 127. As a result, the correction values are all on the positive side, so that the picture becomes whitish, which is a problem.

### SUMMARY OF THE INVENTION

To address the above-mentioned problem, the present invention provides a gray level correction circuit capable of performing a specified correction on the video signal which has passed the contrast circuit without the picture becoming whitish at any value of contrast.

In order to achieve the above object, the gray level correction circuit according to the present invention comprises a cumulative histogram circuit for forming a cumulative histogram for each field, a first multiplier for multiplying an output signal of the cumulative histogram circuit by a constant corresponding to a value of contrast, a normalizing circuit for normalizing output of the first multiplier by dividing it by the total number of samples, an interpolation circuit for outputting a correction value for each pixel according to output of the normalizing circuit and the input video signal, a second multiplier for multiplying the correction value by a constant, and an adder circuit for adding a correction value supplied from the second multiplier to the video signal.

By this arrangement, the gray level correction circuit according to the present invention can perform an intended correction because it can prevent the picture from becoming whitish by multiplying the output signal of the cumulative histogram circuit by a constant corresponding to the value of contrast and then supplying the multiplication result to the normalizing circuit.

As has been described, by use of a cumulative histogram circuit, first and second multiplier circuits, a normalizing circuit, an interpolation circuit and an adder circuit, the present invention makes it possible to perform a gray level correction on the video signal, even when the video signal has passed the contrast circuit, in the manner as originally intended without making the picture whitish at any value of contrast. The present invention provides a great effect in practical application.

### BRIEF DESCRIPTION OF THE DRAWINGS

Fig. 1 is a block diagram of the gray level correction circuit according to an embodiment of the present invention;
Figs. 2A-2F show diagrams for explaining the operation of the embodiment;
Fig. 3 is a block diagram of the gray level correction circuit of the prior art; and
Figs. 4A, 4C, 4D, 4E and 4F show diagrams for explaining the operation of the prior art.

### DESCRIPTION OF THE PREFERRED EMBODIMENT

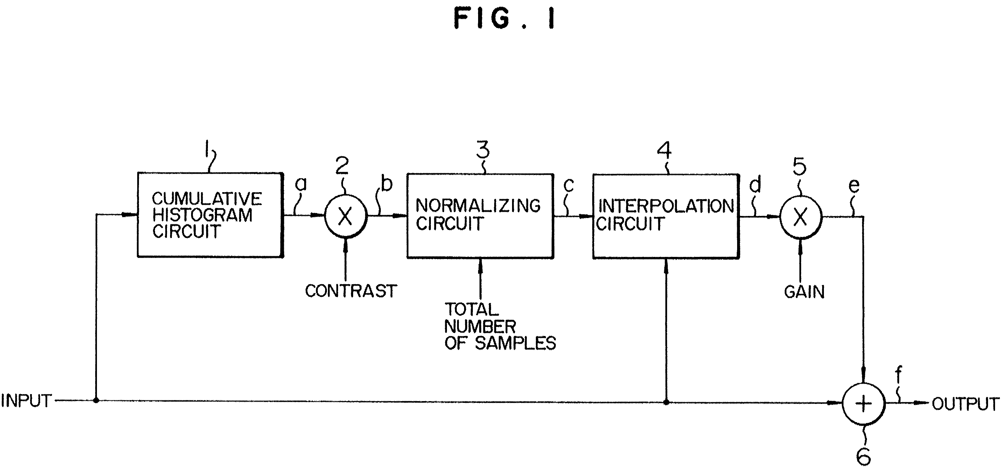

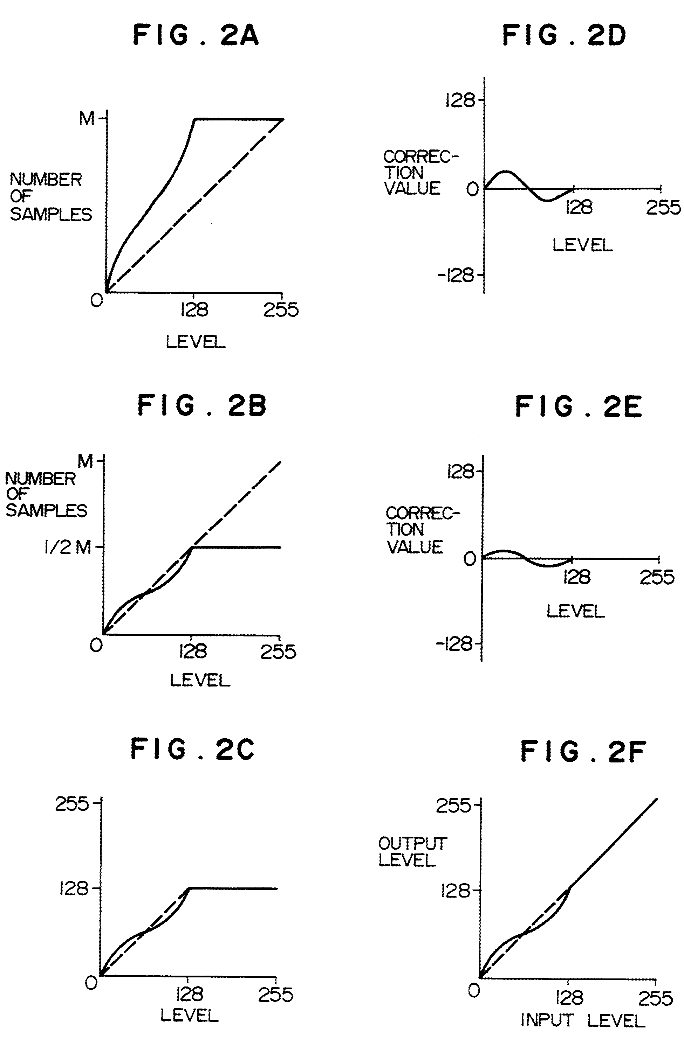

An embodiment of the present invention will be described with reference to Figs. 1 and 2.

Fig. 1 is a block diagram showing the arrangement of the gray level correction circuit according to the present invention. In Fig. 1, the numeral 1 denotes a cumulative histogram circuit for forming a cumulative histogram for each field of the input video signal, and outputting a result "a". The numeral 2 denotes a first multiplier circuit for multiplying output "a" of the cumulative histogram circuit 1 by a first constant. The numeral 3 denotes a normalizing circuit for normalizing the output "b" of of the first multiplier circuit by the total number of samples, and outputting "c". The numeral 4 denotes an interpolation circuit for outputting a correction value for each pixel according to output "c" of the normalizing circuit 3 and the input video signal. The reference numeral 5 denotes a second multiplier circuit for multiplying output "d" of the interpolation circuit 4 by a second constant. The numeral 6 denotes an adder circuit for adding output of the adder circuit 5 to the input video signal.

The operation of the thus arranged gray level correction circuit will be described with reference to Fig. 2. The cumulative histogram circuit 1 forms a cumulative histogram for each field of the input video signal, and outputs a result "a". Fig. 2 shows a case where an input signal having eight bits is used so as to represent 256 levels of tone, and the samples are distributed from level 0 to level 128. Since these are histograms, the sample number M at level 255 is the total number of samples. The first multiplier circuit 2 multiplies the output signal of the cumulative histogram circuit 1 by a constant corresponding to the value of contrast, and outputs "b". In Fig. 2, the constant used here is 1/2. Then, the normalizing circuit 3 normalizes the result "a" of histogram by dividing it by the total number of samples, and outputs "c". In Fig. 2, the output "c" here is an 8-bit signal. The normalized signal "c" is input to the interpolation circuit 4, which subtracts the input signal from the cumulative histogram normalized for each pixel of the input video signal, and outputs a correction value "d" for each pixel. Then, the second multiplier 5 decides a correction amount by multiplying "d" by a constant, and outputs a correction signal "e". In Fig. 2, the constant used at this step is 1/2. Lastly, the adder circuit 6 adds the input signal and the correction signal "e" together, and outputs a signal "f".

## Claims

1. A gray level correction circuit comprising:
a cumulative histogram (1) for forming a cumulative histogram for each field of the input video signal;
a first multiplier circuit (2) for multiplying output of said cumulative histogram circuit (1) by a first constant;
a normalizing circuit (3) for normalizing output of the first multiplier circuit (2) by dividing by the total number of samples, and outputting a normalized signal;
an interpolation circuit (4) for outputting a correction value for each pixel by using output of said normalizing circuit and the input video signal;
a second multiplier circuit (5) for multiplying output of said interpolation circuit (4) by a second constant; and
an adder circuit (6) for adding output of the second adder circuit (5) to the input video signal.
